# EUROPEAN PATENT APPLICATION

(11) **EP 4 797 605 A1**
(43) Date of publication of application: **26.08.2026**
(21) Application number: 24888046.0
(22) Date of filing: 07.11.2024
(51) Int. Cl.: H04L 5/00, H04B 17/373

(54) **CHANNEL QUALITY EVALUATION METHOD AND APPARATUS**

(30) Priority: 07.11.2023 CN 202311481665
(71) Applicant: HUAWEI TECHNOLOGIES CO., LTD., Shenzhen, Guangdong 518129 (CN)
(72) Inventor: HE, Jia, Shenzhen, Guangdong 518129 (CN); ZHOU, Zhi, Shenzhen, Guangdong 518129 (CN); ZHANG, Xi, Shenzhen, Guangdong 518129 (CN)
(74) Representative: Goddar, Heinz J.
(86) International application number: PCT/CN2024/130489
(87) International publication number: WO 2025/098435

(57) **Abstract**

This application provides a channel quality assessment method and an apparatus, relating to the field of wireless communication technologies. In the method, a first communication apparatus obtains at least one piece of radio frequency channel mapping data, where the radio frequency channel mapping data includes at least a channel status prediction value of a first location, and the first communication apparatus is located at the first location; the first communication apparatus receives a measurement signal; and the first communication apparatus sends first sensing quality, where the first sensing quality is determined by the first communication apparatus based on a measurement result of the measurement signal and the channel status prediction value of the first location. Based on the foregoing solution, the sensing quality is determined based on the channel status prediction value that is of the first location and that is included in the radio frequency channel mapping data and the measurement result of the measurement signal. Because the radio frequency channel mapping data is obtained by obtaining scatterer information in a physical environment and predicting a channel in the physical environment, dependency on dynamic target information is reduced. Therefore, impact on latency can be reduced.

## Description

### CROSS-REFERENCE TO RELATED APPLICATIONS

This application claims priority to Chinese Patent Application No. 202311481665.4, filed with the China National Intellectual Property Administration on November 7, 2023 and entitled "CHANNEL QUALITY ASSESSMENT METHOD AND APPARATUS", which is incorporated herein by reference in its entirety.

### TECHNICAL FIELD

This application relates to the field of wireless communication technologies, and in particular, to a channel quality assessment method and an apparatus.

### BACKGROUND

Sensing, also referred to as radio sensing, refers to a process of emitting electromagnetic energy into space, and receiving electromagnetic waves reflected by objects in the space, to calculate information about the objects, including parameters like location, direction, height, velocity, size, and trajectory, and detect internal and external shapes and structures of the objects. By examining how radio waves propagate, echo, reflect, and scatter, the physical world is sensed and better understood. As one of electromagnetic wave sensing technologies, the radio sensing technology can be used as an important alternative for security check, hidden object detection, environment reconstruction, and monitoring by virtue of its penetrability and security.

Currently, in vehicle to X (vehicle to X, V2X) scenarios, vehicles are sensed by using radars, to obtain a beam direction prediction result for communication between a base station and the vehicles, and change a beamforming (beam forming) access procedure. However, in the foregoing scenarios, using only dynamic target information for communication prediction raises high requirements on dynamism and has a considerable impact on latency.

### SUMMARY

This application provides a channel quality assessment method and an apparatus, to reduce dependency on dynamic target information and reduce impact on latency.

According to a first aspect, a channel quality assessment method is provided. The method may be performed by a first communication apparatus or a chip/chip system. The first communication apparatus may be a terminal device or a network device. An example in which the first communication apparatus performs the method is used for description. In the method, the first communication apparatus obtains at least one piece of radio frequency channel mapping data, where the radio frequency channel mapping data includes at least a channel status prediction value of a first location, and the first communication apparatus is located at the first location; the first communication apparatus receives a measurement signal from a second communication apparatus; and the first communication apparatus sends first sensing quality to the second communication apparatus, where the first sensing quality is determined by the first communication apparatus based on a measurement result of the measurement signal and the channel status prediction value of the first location.

Based on the foregoing solution, the sensing quality is determined based on the channel status prediction value that is of the first location and that is included in the radio frequency channel mapping data and the measurement result of the measurement signal. Because the radio frequency channel mapping data is obtained by obtaining scatterer information in a physical environment and predicting a channel in the physical environment, dependency on dynamic target information is reduced. Therefore, impact on latency can be reduced.

In a possible implementation, the radio frequency channel mapping data further includes reference sensing quality of the first location, and the first communication apparatus updates the reference sensing quality of the first location to the first sensing quality.

Based on the foregoing solution, the first communication apparatus may update the radio frequency channel mapping data, so that the radio frequency channel mapping data is used for communication or sensing positioning.

In a possible implementation, the radio frequency channel mapping data further includes scatterer information of the first location, and the scatterer information indicates a scatterer associated with at least one communication path between the first communication apparatus at the first location and a network device. The first communication apparatus updates, to the first sensing quality, reference sensing quality of another location associated with the scatterer other than the first location.

Based on the foregoing solution, sensing quality of another grid associated with a scatterer or a scatterer group may be updated based on the first sensing quality, thereby improving reliability and services of the radio frequency channel mapping data.

In a possible implementation, the radio frequency channel mapping data further includes one or more of the following:
configuration information of the measurement signal, where the configuration information includes one or more of information about a transmit/receive antenna port number, precoding information, and subcarrier information of the measurement signal;
location information, where the location information indicates a geographical position of the first location; and
grid setting information, where the first location is indicated by using a number of a grid, and the grid setting information indicates a start location of the grid and/or a resolution of the grid.

Based on the foregoing solution, the configuration information of the measurement signal may indicate the configuration information used for transmitting and receiving the measurement signal, to improve accuracy of the measurement result. The location information may indicate the geographical position of the first location, so that the channel status prediction value and the sensing quality may be associated with the location information. The grid setting information may indicate the start location of the grid and the resolution of the grid, so that when the updated radio frequency channel mapping data is used for subsequent sensing positioning and communication, an actual physical environment may be determined based on the grid setting information.

In a possible implementation, when the first sensing quality is greater than a threshold, the radio frequency channel mapping data of the first location and radio frequency channel mapping data of another location are used for communication and/or positioning; or when the first sensing quality is less than the threshold, the radio frequency channel mapping data of the first location and the radio frequency channel mapping data of another location are not used for communication and/or positioning.

Based on the foregoing solution, the first sensing quality is compared with the threshold, so that whether the channel status prediction value of the first location is accurate can be determined, and whether the scatterer information of the first location can be used for communication and/or positioning can also be determined.

In a possible implementation, the first communication apparatus receives the radio frequency channel mapping data from the second communication apparatus.

According to this solution, if the first communication apparatus is a terminal device, the first communication apparatus receives the radio frequency channel mapping data from the second communication apparatus, and the first communication apparatus updates the first sensing quality, so that privacy of the terminal device can be improved.

According to a second aspect, a channel quality assessment method is provided. The method may be performed by a second communication apparatus or a chip/chip system. The second communication apparatus may be a terminal device or a network device. An example in which the second communication apparatus performs the method is used for description. In the method, the second communication apparatus sends at least one piece of radio frequency channel mapping data, where the radio frequency channel mapping data includes at least a channel status prediction value of a first location, and a first communication apparatus is located at the first location; the second communication apparatus sends a measurement signal to the first communication apparatus; and the second communication apparatus receives first sensing quality from the first communication apparatus, where the first sensing quality is determined by the first communication apparatus based on a measurement result of the measurement signal and the channel status prediction value of the first location.

In a possible implementation, the radio frequency channel mapping data further includes reference sensing quality of the first location, and the reference sensing quality of the first location is updated to the first sensing quality.

In a possible implementation, the radio frequency channel mapping data further includes scatterer information of the first location, and the scatterer information indicates a scatterer associated with at least one communication path between the first communication apparatus at the first location and a network device. The second communication apparatus updates, to the first sensing quality, reference sensing quality of another location associated with the scatterer other than the first location.

In a possible implementation, the radio frequency channel mapping data further includes one or more of the following:
configuration information of the measurement signal, where the configuration information includes one or more of information about a transmit/receive antenna port number, precoding information, and subcarrier information of the measurement signal;
location information, where the location information indicates a geographical position of the first location; and
grid setting information, where the first location is indicated by using a number of a grid, and the grid setting information indicates a start location of the grid and/or a resolution of the grid.

In a possible implementation, when the first sensing quality is greater than (or greater than or equal to) a first threshold, the radio frequency channel mapping data of the first location and radio frequency channel mapping data of the another location are used for communication and/or positioning; or when the first sensing quality is less than (or less than or equal to) a second threshold, the radio frequency channel mapping data of the first location and the radio frequency channel mapping data of the another location are not used for communication and/or positioning. It may be understood that the first threshold and the second threshold may be the same or different. In a possible case, when the first threshold is different from the second threshold, and the first sensing quality is less than (or less than or equal to) the first threshold and greater than (or greater than or equal to) the second threshold, the radio frequency channel mapping data of the first location and the radio frequency channel mapping data of the another location may be partially used for communication and/or positioning. For example, a large range including the first location or the another location may be obtained based on the radio frequency channel mapping data of the first location or the radio frequency channel mapping data of the another location, and beam control, positioning, communication, or the like is performed within the range.

According to a third aspect, a communication apparatus is provided, including a processing unit and a transceiver unit.

The processing unit is configured to obtain at least one piece of radio frequency channel mapping data, where the radio frequency channel mapping data includes at least a channel status prediction value of a first location, and the communication apparatus is located at the first location. The transceiver unit is configured to receive a measurement signal from a second communication apparatus. The transceiver unit is further configured to send first sensing quality to the second communication apparatus, where the first sensing quality is determined based on a measurement result of the measurement signal and the channel status prediction value of the first location.

In a possible implementation, the radio frequency channel mapping data further includes reference sensing quality of the first location, and the processing unit is further configured to update the reference sensing quality of the first location to the first sensing quality.

In a possible implementation, the radio frequency channel mapping data further includes scatterer information of the first location, and the scatterer information indicates a scatterer associated with at least one communication path between the communication apparatus at the first location and a network device. The processing unit is further configured to update, to the first sensing quality, reference sensing quality of another location associated with the scatterer other than the first location.

In a possible implementation, the radio frequency channel mapping data further includes one or more of the following:
configuration information of the measurement signal, where the configuration information includes one or more of information about a transmit/receive antenna port number, precoding information, and subcarrier information of the measurement signal;
location information, where the location information indicates a geographical position of the first location; and
grid setting information, where the first location is indicated by using a number of a grid, and the grid setting information indicates a start location of the grid and/or a resolution of the grid.

In a possible implementation, when the first sensing quality is greater than a threshold, the radio frequency channel mapping data of the first location and radio frequency channel mapping data of the another location are used for communication and/or positioning; or
when the first sensing quality is less than the threshold, the radio frequency channel mapping data of the first location and the radio frequency channel mapping data of the another location are not used for communication and/or positioning.

In a possible implementation, the transceiver unit is further configured to receive the radio frequency channel mapping data from the second communication apparatus.

According to a fourth aspect, a communication apparatus is provided, including a processing unit and a transceiver unit.

The processing unit is configured to determine at least one piece of radio frequency channel mapping data, where the radio frequency channel mapping data includes at least a channel status prediction value of a first location, and a first communication apparatus is located at the first location. The transceiver unit is configured to send the radio frequency channel mapping data to the first communication apparatus. The transceiver unit is further configured to send a measurement signal to a second communication apparatus. The transceiver unit is further configured to receive first sensing quality from the first communication apparatus, where the first sensing quality is determined based on a measurement result of the measurement signal and the channel status prediction value of the first location.

In a possible implementation, the radio frequency channel mapping data further includes reference sensing quality of the first location, and the reference sensing quality of the first location is updated to the first sensing quality.

In a possible implementation, the radio frequency channel mapping data further includes scatterer information of the first location, and the scatterer information indicates a scatterer associated with at least one communication path between the first communication apparatus at the first location and a network device. The processing unit is further configured to update, to the first sensing quality, reference sensing quality of another location associated with the scatterer other than the first location.

In a possible implementation, the radio frequency channel mapping data further includes one or more of the following:
configuration information of the measurement signal, where the configuration information includes one or more of information about a transmit/receive antenna port number, precoding information, and subcarrier information of the measurement signal;
location information, where the location information indicates a geographical position of the first location; and
grid setting information, where the first location is indicated by using a number of a grid, and the grid setting information indicates a start location of the grid and/or a resolution of the grid.

In a possible implementation, when the first sensing quality is greater than (or greater than or equal to) a first threshold, the radio frequency channel mapping data of the first location and radio frequency channel mapping data of the another location are used for communication and/or positioning; or when the first sensing quality is less than (or less than or equal to) a second threshold, the radio frequency channel mapping data of the first location and the radio frequency channel mapping data of the another location are not used for communication and/or positioning. It may be understood that the first threshold and the second threshold may be the same or different. In a possible case, when the first threshold is different from the second threshold, and the first sensing quality is less than (or less than or equal to) the first threshold and greater than (or greater than or equal to) the second threshold, the radio frequency channel mapping data of the first location and the radio frequency channel mapping data of the another location may be partially used for communication and/or positioning. For example, a large range including the first location or the another location may be obtained based on the radio frequency channel mapping data of the first location or the radio frequency channel mapping data of the another location, and beam control, positioning, communication, or the like is performed in the range.

According to a fifth aspect, this application provides a communication apparatus, including a processor. The processor is coupled to a memory. The memory is configured to store a computer program or instructions. The processor is configured to execute the computer program or the instructions, to perform the method according to the implementations of the first aspect and the second aspect. The memory may be located inside or outside the apparatus. There is one or more processors.

According to a sixth aspect, this application provides a communication apparatus, including a processor and an interface circuit. The interface circuit is configured to communicate with another apparatus, and the processor is configured to perform the method according to the implementations of in the first aspect and the second aspect.

According to a seventh aspect, a communication apparatus is provided. The apparatus includes a logic circuit and an input/output interface.

According to an eighth aspect, this application provides a communication system, including a first communication apparatus and a second communication apparatus that are configured to perform the method according to the implementations of the first aspect and the second aspect.

According to a ninth aspect, this application further provides a chip system, including a processor, configured to perform the method according to the implementations of the first aspect and the second aspect.

According to a tenth aspect, this application further provides a computing program product, including computer-executable instructions. When the computer-executable instructions are run on a computer, the method according to the implementations of the first aspect and the second aspect is performed.

According to an eleventh aspect, this application further provides a computer-readable storage medium. The computer-readable storage medium stores a computer program or instructions. When the instructions are run on a computer, the method according to the implementations of the first aspect and the second aspect is implemented.

For technical effect achieved in the second aspect to the eleventh aspect, refer to the technical effect in the first aspect and the second aspect. Details are not described herein again.

### BRIEF DESCRIPTION OF DRAWINGS

FIG. 1 is a diagram of an application scenario of a sensing technology;
FIG. 2A is a diagram of monostatic sensing;
FIG. 2B is a diagram of bistatic sensing;
FIG. 3 is a diagram of a communication system according to an embodiment of this application;
FIG. 4A is a diagram of a physical environment map according to an embodiment of this application;
FIG. 4B is a diagram of a reconstructed map according to an embodiment of this application;
FIG. 4C is a diagram of a grid according to an embodiment of this application;
FIG. 4D is a diagram of a channel status prediction value according to an embodiment of this application;
FIG. 5 is an example flowchart of a channel quality assessment method according to an embodiment of this application;
FIG. 6 is a diagram of a scenario of a method for updating sensing quality according to an embodiment of this application;
FIG. 7 is an example flowchart of another channel quality assessment method according to an embodiment of this application;
FIG. 8 is a diagram of a communication apparatus according to an embodiment of this application;
FIG. 9 is a diagram of another communication apparatus according to an embodiment of this application;
FIG. 10 is a diagram of still another communication apparatus according to an embodiment of this application; and
FIG. 11 is a diagram of yet another communication apparatus according to an embodiment of this application.

### DESCRIPTION OF EMBODIMENTS

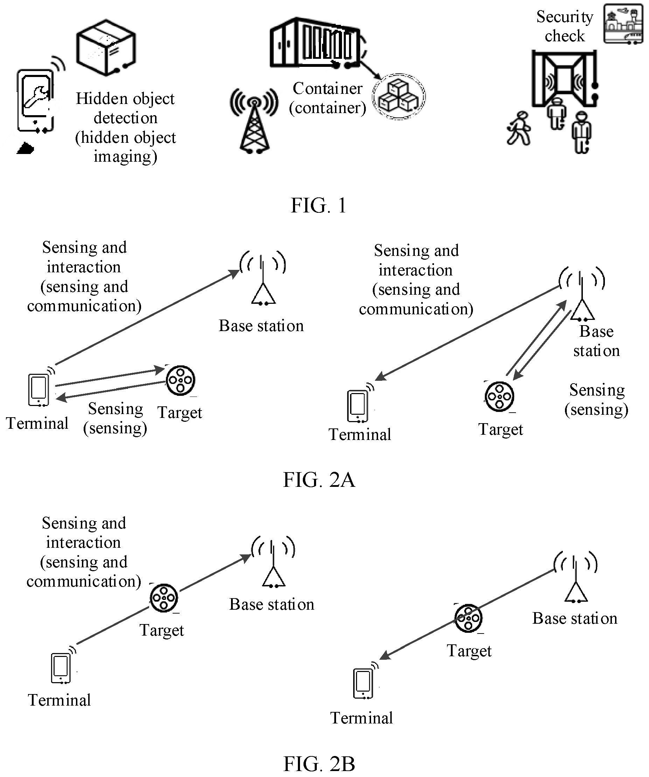

For ease of understanding of the technical solutions provided in embodiments of this application, the following describes technical terms used in embodiments of this application.
(1) Sensing, also referred to as radio sensing, refers to a process of emitting electromagnetic energy into space, and receiving electromagnetic waves reflected by objects in the space, to calculate information about the objects, including parameters like location, direction, height, velocity, size, and motion trajectory, and detect internal and external shapes and structures of the objects. By examining how radio waves propagate, echo, reflect, and scatter, the physical world is sensed and better understood. As one of electromagnetic wave sensing technologies, the radio sensing technology can be used as an important alternative for security check, hidden object detection, environment reconstruction, and monitoring by virtue of its penetrability and security, as shown in FIG. 1.
(2) An integrated sensing and communication system, also referred to as an integration of sensing and communication system, integrates (integrate) electromagnetic signals used for communication and electromagnetic signals used for sensing for use. A conventional active positioning target is mainly a terminal device that can transmit an electromagnetic wave, for example, a mobile phone, a vehicle, or an internet of things (internet of things, IoT) device. A target of virtual environment reconstruction further includes passive objects, such as buildings, urban facilities (billboards, bridges, and the like), and traffic conditions (vehicles and bicycles). An electromagnetic wave signal propagated in a spatial environment is received, to solve a composition of the spatial environment, and detection and reconstruction of a virtual environment (an active object, a passive object, and a device) are performed, to further assist in positioning or assist in improving communication performance. A network device and a terminal device are main devices for reconstructing a virtual environment. Sensing quality is related to a communication and sensing resource, space, time, a frequency band, power consumption, and a station. The station may be a network device, a terminal device, a wireless terminal access device (customer premise equipment, CPE), or the like.

For example, the space may include a quantity of beams, which can affect a sensing angle range. The time includes a sensing symbol length, which can affect sensing cross-range accuracy. The frequency band includes a sensing bandwidth, which can affect sensing range accuracy. The power consumption includes power of a sensing signal, which can affect a sensing distance range. The station may include a communication capacity, which can affect sensing fusion accuracy.

A transmitter and a receiver of a sensing signal may be classified into monostatic (monostatic), bistatic (bi-static), and multistatic (multi-static) based on whether the transmitter and the receiver are co-location or at different locations. A multistatic system is generally a hybrid system including a monostatic system and a bistatic system. Two typical integrated sensing and communication system architectures are shown in FIG. 2A and FIG. 2B. It may be understood that monostatic sensing may also be referred to as single-station sensing, that is, sensing is performed by using one station. Similarly, multistatic sensing may also be referred to as multi-station sensing, that is, sensing is performed by using two or more stations. Similarly, multistatic sensing may be referred to as multi-station sensing.

FIG. 2A shows a monostatic integrated sensing and communication system. In the monostatic integrated sensing and communication system, a sensing transmitter and a sensing receiver are located at a same location, and a data payload may be used as a sensing signal. Therefore, a sensing function does not consume communication resources. In addition, because the transmitter and the receiver are at the same location, non-ideal factors such as synchronization does not exist, and a sensing algorithm complexity and estimation accuracy are good. In monostatic environment reconstruction, because self-transmission and self-reception is used, a signal angle range that can be detected is strongly related to an environmental incidence angle. A reflected signal of an object quickly attenuates as the incidence angle increases. That is, a field of view range of monostatic environment reconstruction is greatly affected by a material and a placement angle of a target object. In monostatic sensing, most components of an echo signal have single-bounce (single bounce) paths, which satisfies the radar assumption. Therefore, there are fewer ill-conditioned equation problems when a spatial environment is solved, thereby implementing higher solution accuracy of the spatial environment.

FIG. 2B shows a bistatic integrated sensing and communication system. In the bistatic sensing and communication integrated system, a sensing receiver and a sensing transmitter are located at different locations, and a dedicated pilot or known signal needs to be used for a sensing signal. Therefore, a sensing function consumes communication resources. In addition, because the transmitter and the receivers are at different locations, there are non-ideal factors such as synchronization and phase noise. Therefore, a sensing algorithm is complex, estimation accuracy is poor, and a complex calibration algorithm is required for processing. In bistatic sensing, because self-transmission and other-receiving is used, an environment angle that can be detected is large, and a sensing angle of view has large coverage as a terminal moves. In addition, an echo signal has abundant components, has a large quantity of multiple-bounce paths (bounce is greater than or equal to 2), and has high power. In rich-scattering urban space, a large quantity of multiple-bounce paths introduce an ill-conditioned equation, resulting in shadow space and incorrect solutions during virtual environment solving.

The technical solutions in embodiments of this application may be applied to a new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, a worldwide interoperability for microwave access (Worldwide Interoperability for Microwave Access, WiMAX) communication system, a next-generation wireless communication system such as 6G, and the like. This is not limited herein.

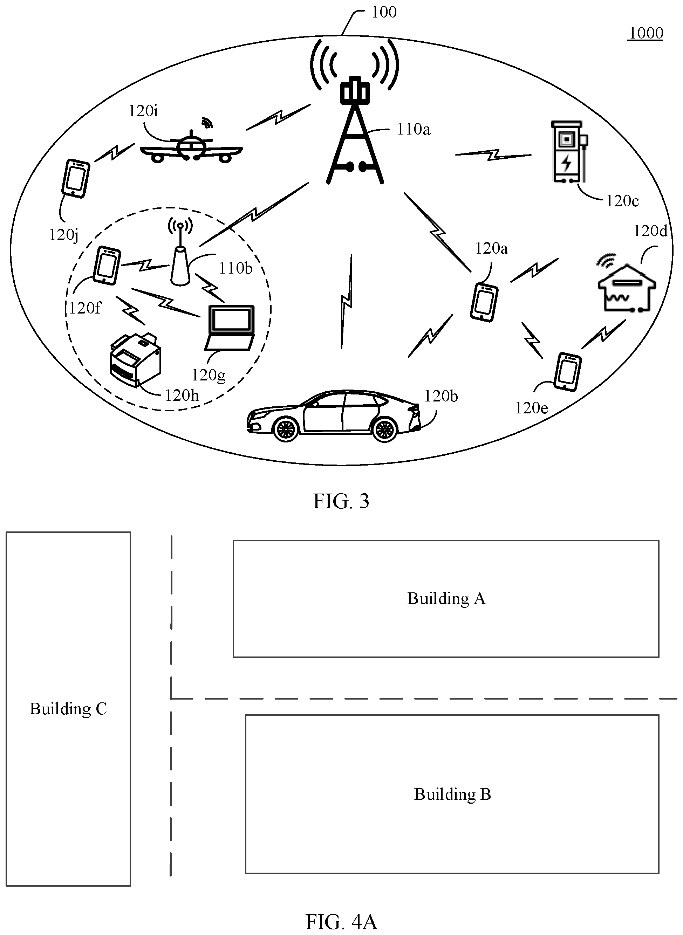

FIG. 3 is a diagram of an architecture of a communication system 1000 to which embodiments of this application are applied. As shown in FIG. 3, the communication system includes a radio access network 100. The radio access network 100 may include at least one network device (110a and/or 110b in FIG. 3), and may further include at least one terminal apparatus (at least one of 120a to 120j in FIG. 3). The terminal apparatus is connected to an access network device in a wireless manner, and the access network device is connected to a core network device in a wireless or wired manner. Terminal apparatuses may be connected to each other in a wired or wireless manner, and network devices may be connected to each other in a wired or wireless manner. FIG. 3 is merely a diagram. The communication system may further include another network device, for example, a wireless relay device and a wireless backhaul device, which are not drawn in FIG. 3.

The network device is a network side device having a wireless transceiver function. The network device may be an apparatus that is in a radio access network (radio access network, RAN) and that provides a wireless communication function for a terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes a part of functions of a base station, for example, may be a central unit (central unit, CU) or a distributed unit (distributed unit, DU). The CU herein completes radio resource control protocol and packet data convergence protocol (packet data convergence protocol, PDCP) functions of the base station, and may further complete service data adaptation protocol (service data adaptation protocol, SDAP) functions. The DU completes radio link control layer and medium access control (medium access control, MAC) layer functions of the base station, and may further complete a part or all physical layer functions. For detailed descriptions of the foregoing protocol layers, refer to technical specifications related to the 3rd generation partnership project (3rd generation partnership project, 3GPP). The network device may be a macro base station (for example, 110a in FIG. 3), may be a micro base station or an indoor base station (for example, 110b in FIG. 3), or may be a relay node, a donor node, or the like. A specific technology and a specific device form that are used by the network device are not limited in embodiments of this application.

In another possible scenario, a plurality of RAN nodes coordinate to assist a terminal in implementing radio access, and different RAN nodes separately implement a part of functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device is a user side device having a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific apparatus form that are used by the terminal apparatus are not limited in embodiments of this application.

The network device and the terminal device may be at fixed locations, or may be movable. The network device and the terminal device may be deployed on the land, including being deployed indoor, outdoor, handheld, or vehicle-mounted; may be deployed on the water surface; or may be deployed on an airplane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 3 may be configured as a mobile network device. For the terminal device 120j that accesses the radio access network 100 through 120i, the terminal device 120i is a network device. However, for the network device 110a, 120i is a terminal device, that is, 110a and 120i communicate with each other through a radio air interface protocol. It is clear that 110a and 120i may alternatively communicate with each other according to an interface protocol between network devices. In this case, for 110a, 120i is also a network device. Therefore, the network device and the terminal device may be collectively referred to as communication apparatuses. 110a and 110b in FIG. 3 may be referred to as communication apparatuses with functions of a network device, and 120a to 120j in FIG. 3 may be referred to as communication apparatus with functions of a terminal device.

In embodiments of this application, the functions of the network device may alternatively be performed by a module (for example, a chip) in the network device, or may be performed by a control subsystem including the functions of the network device. The control subsystem including the functions of the network device may be a control center in the foregoing application scenarios such as a smart grid, industrial control, smart transportation, and a smart city. The functions of the terminal device may alternatively be performed by a module (for example, a chip or a modem) in the terminal device, or may be performed by an apparatus including the functions of the terminal device. The following provides descriptions by using an example in which functions of a terminal device are performed by a terminal and functions of a network device are performed by a base station.

Currently, in vehicle to X (vehicle to X, V2X) scenarios, vehicles are sensed by using radars, to obtain a beam direction prediction result of communication between a base station and the vehicles, and change a beamforming (beam forming) access procedure. However, in the foregoing scenarios, using only dynamic target information for communication prediction raises high requirements on dynamism and has a considerable impact on latency.

In view of this, embodiments of this application provide a channel quality assessment method, to obtain sensing quality of a channel, assist in communication and positioning, and reduce impact on latency. In the method, the sensing quality may be determined based on a channel status prediction value that is of a first location and that is included in radio frequency channel mapping data and a measurement result of a measurement signal. Because the radio frequency channel mapping data is obtained by obtaining scatterer information in a physical environment and predicting a channel in the physical environment, dependency on dynamic target information is reduced. Therefore, impact on latency can be reduced. The following describes a method for obtaining the radio frequency channel mapping data in embodiments of this application.

In a communication system, environment information is obtained by using a radio sensing technology, to assist in channel prediction, positioning, beamforming, and the like, thereby improving communication service quality. A process of performing prediction by using the radio sensing technology to form a radio frequency channel mapping map is referred to as radio frequency mapping (radio frequency mapping, RF mapping). A map obtained through RF mapping is referred to as a radio frequency channel map. Data corresponding to the radio frequency channel map is referred to as radio frequency channel mapping data.

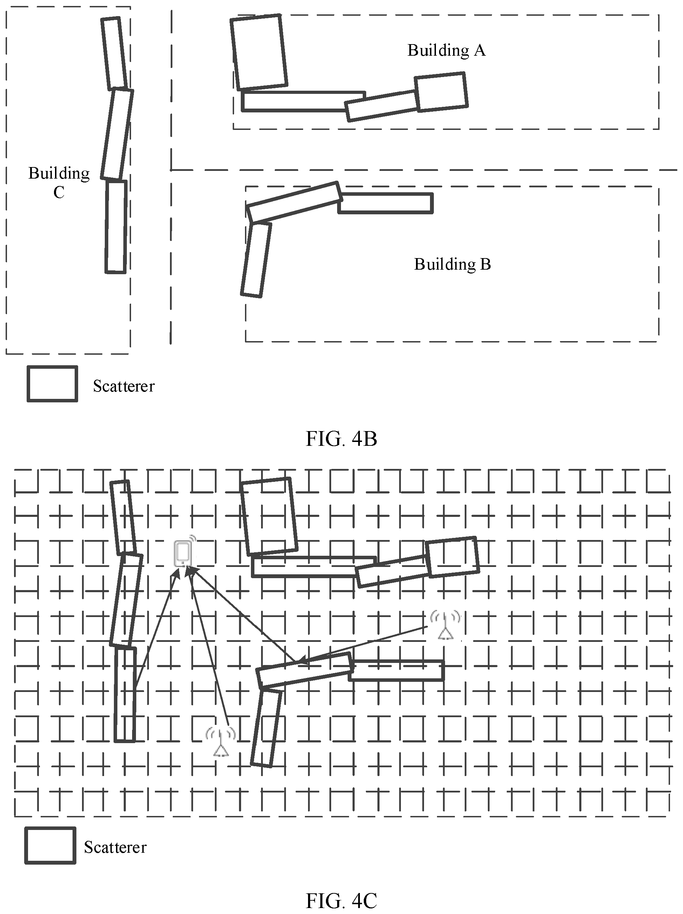

FIG. 4A shows a physical environment map. In FIG. 4A, a dashed line may represent a road. In embodiments of this application, radio frequency channel mapping data of a physical environment shown in FIG. 4A may be obtained. In the physical environment, there may be a plurality of sensing communication nodes, such as a base station, a terminal, a receiving point (transmission and receiving point, TRP), or CPE. The sensing communication node may transmit an electromagnetic wave, a radar signal, or the like to obtain a reconstructed map, as shown in FIG. 4B. For example, the sensing communication node may transmit an electromagnetic wave or a radar signal, and receive an echo signal, to obtain scatterer information in the physical environment. In a possible case, the sensing communication nodes may exchange the obtained scatterer information with each other, to obtain an environment reconstruction result with higher accuracy in a larger range, as shown in FIG. 4B. Any one of the plurality of sensing communication nodes may divide the physical environment map into a plurality of regions, and use each region as a location. For ease of description, any one of the foregoing sensing communication nodes is referred to as a target sensing communication node. For example, the target sensing communication node may divide the physical environment map into a plurality of rectangular regions or referred to as grids, as shown in FIG. 4C. For another example, the target sensing communication node may divide the physical environment map into different circular regions (not shown in the figure). For another example, the target sensing communication node may divide the physical environment map into different hexagonal regions or referred to as cellular regions (not shown in the figure), or the like. This is not specifically limited in this application. It may be understood that, when the target sensing communication node divides the physical environment map into the plurality of regions, resolutions of the regions may be predefined or preconfigured in a protocol. For example, the physical environment map may be divided into the plurality of regions based on a resolution of every 5 m, 10 m, or the like. This is not specifically limited in this application.

In this specification, an example in which the target sensing communication node divides the physical environment map into a plurality of grids is used for description.

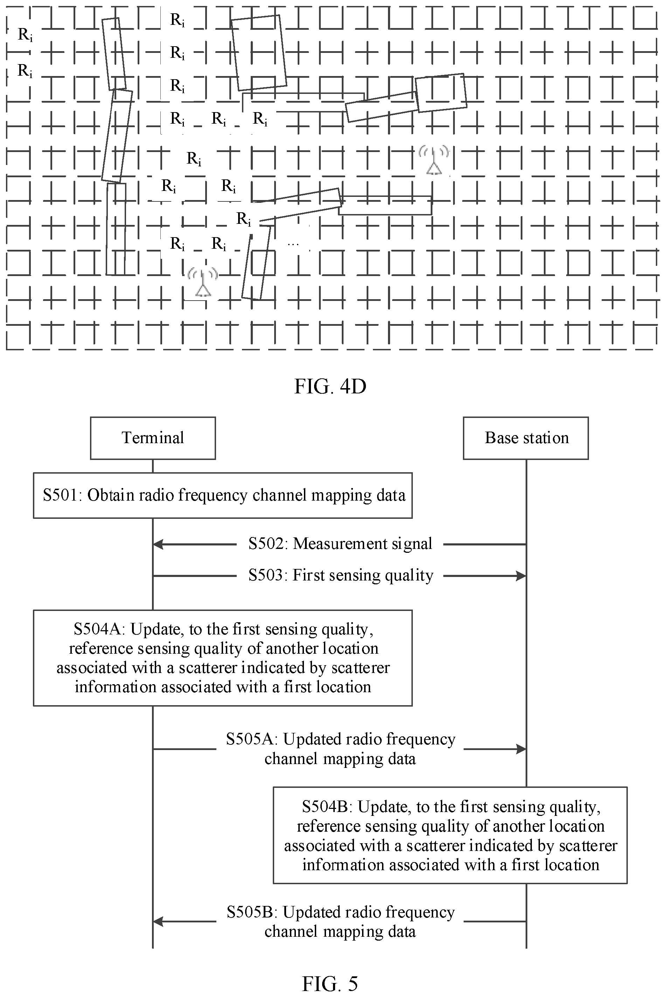

The target sensing communication node may assume that there is one terminal at each location, and simulate a transmission path from a base station to the terminal at each location, as shown in FIG. 4C. It may be understood that the transmission path may include a direct transmission path from the base station to the terminal, or may include a transmission path that reaches the terminal through reflection of a scatterer. For example, the target sensing communication node may obtain, by using a mirror line of sight tracking algorithm, the transmission path from the base station to the terminal at each location. The target sensing communication node may obtain, through calculation by using the simulated transmission path, a channel status prediction value of each location, as shown in FIG. 4D. For example, the target sensing communication node may calculate, by using a ray tracking tool, an electromagnetic calculation tool, or a simple simulation tool based on mirror reflection, the channel status prediction value of the transmission path from the base station to the terminal at each location after passing through the environment. In addition, the target sensing communication node may obtain scatterer information associated with each location, that is, information about a scatterer through which the transmission path from the base station to the terminal at each location passes. In this way, the radio frequency channel mapping data can be obtained.

It should be noted that the foregoing manner of obtaining the radio frequency channel mapping data is merely shown as an example, and does not constitute a limitation on the method for obtaining the radio frequency channel mapping data.

The plurality of sensing communication nodes in the foregoing physical environment may include a base station. In a possible scenario, a processing operation of the base station may be performed by a CU, and a transceiver operation of the base station may be performed by a DU or a RU. For example, the CU may generate an electromagnetic wave used for sensing, and the CU may send the electromagnetic wave to the DU. The DU may send the electromagnetic wave; or the DU may send the electromagnetic wave to the RU, and the RU sends the electromagnetic wave. Similarly, the DU may receive an electromagnetic wave, and send the electromagnetic wave to the CU. The CU determines scatterer information or scatterer group information, to determine a reconstructed map. Optionally, the RU may receive an electromagnetic wave, and send the electromagnetic wave to the DU.

In another possible scenario, a processing operation of a base station may be performed by a CU-CP, and a transceiver operation of the base station may be performed by a DU or a RU. For example, the CU-CP may generate an electromagnetic wave used for sensing, and the CU-CP may send the electromagnetic wave to the DU. The DU may send the electromagnetic wave; or the DU may send the electromagnetic wave to the RU, and the RU sends the electromagnetic wave. Similarly, the DU may receive an electromagnetic wave, and send the electromagnetic wave to the CU-CP. The CU-CP determines scatterer information or scatterer group information, to determine a reconstructed map. Optionally, the RU may receive an electromagnetic wave, and send the electromagnetic wave to the DU.

Similarly, the target sensing communication node may be a base station, a terminal, or a TRP. If the target sensing communication node is a base station, in a possible scenario, a processing operation of the base station may be performed by a CU, and a transceiver operation of the base station may be performed by a DU or a RU. For example, the CU may divide a physical environment map into a plurality of regions, use each region as a location, and determine radio frequency channel mapping data of each location. The CU may send the radio frequency channel mapping data to the DU, and the DU may send the radio frequency channel mapping data to a terminal or a core network. Optionally, the DU may send the radio frequency channel mapping data to the RU, and the RU sends the radio frequency channel mapping data to the terminal or the core network.

In another possible scenario, a processing operation of the base station may be performed by a CU-CP, and a transceiver operation of the base station may be performed by a DU or a RU. For example, the CU-CP may divide a physical environment map into a plurality of regions, use each region as a location, and determine radio frequency channel mapping data of each location. The CU-CP may send the radio frequency channel mapping data to the DU, and the DU may send the radio frequency channel mapping data to a terminal or a core network. Optionally, the DU may send the radio frequency channel mapping data to the RU, and the RU sends the radio frequency channel mapping data to the terminal or the core network.

In an O-RAN scenario, an operation performed by the CU may be performed by an O-CU, an operation performed by the DU may be performed by an O-DU, an operation performed by the RU may be performed by an O-RU, and an operation performed by the CU-CP may be performed by an O-CU-CP.

In this application, the radio frequency channel map may indicate information in the following two aspects.

In one aspect, the radio frequency channel map corresponds to a specific geographical region, and indicates geographical positions and region sizes of a plurality of regions obtained by dividing the geographical region.

The geographical region may be a region within a specific range in the real physical world. For example, the geographical region may be represented by using longitude, latitude, and altitude. For example, an outdoor scenario of 100 m × 100 m is defined with a reference to a start point denoted as (x_0, y_0, z_0).

The plurality of regions may be regions obtained by dividing the geographical region in a specific manner. For example, the 100 m × 100 m geographical region is divided in a manner of 1 m × 1 m, to obtain 100 × 100 regions. Each region is 1 m × 1 m.

It is easy to understand that, in this application, a region (that is, the region obtained by dividing the geographical region in the specific manner) in a radio frequency channel map may have at least one of the following attributes: a shape, a size, an area, a geographical position, and the like.

In this application, different regions have a same shape, contour, size, radius, and area. Different regions have different geographical positions. Different regions do not overlap.

In a possible implementation, a shape of a region may be a square, or may be another shape, such as a rectangle, a trapezoid, or a triangle. Alternatively, the shape of the region may be an irregular shape. This is not limited.

For example, the shape of the region may be defined in a protocol, or may be defined by a network device. Shapes of regions defined by different network devices may be the same or different. A same network device may also define shapes of a plurality of regions. Similarly, the size, radius, and area of the region may also be defined in a protocol, or may be defined by the network device. Sizes, radii, and areas of regions defined by the different network devices may be the same or different. A same network device may also define sizes of a plurality of regions, radii of a plurality of regions, or areas of a plurality of regions.

In a possible implementation, a plurality of regions may be indexed (for example, numbered) to identify different regions.

In a possible case, the radio frequency channel map includes a plurality of grids, and the plurality of grids are in a one-to-one correspondence with the plurality of regions. It is easy to understand that, in this application, a grid in the radio frequency channel map may have at least one of the following attributes: a shape, a size, an area, and the like. The shape of the grid may be consistent with a shape of a region corresponding to the grid. The size of the grid is in a specific proportion to a size of the region corresponding to the grid. The area of the grid is in a specific proportion to an area of the region corresponding to the grid. The size of the grid may also be described in another manner, for example, a resolution.

For content of the radio frequency channel mapping data in embodiments of this application, refer to Table 1. It may be understood that the radio frequency channel mapping data may be stored in an entity having a sensing function or a sensing fusion function, for example, a TRP, a terminal, a base station, or a session management function (session management function, SMF) or a location management function (location management function, LMF) in a core network. In other words, after obtaining the radio frequency channel mapping data, the target sensing communication node may send the radio frequency channel mapping data to the TRP, the terminal, the base station, or the SMF or the LMF in the core network device.

It should be noted that a session management function network element and a location management function network element in embodiments of this application may be a network element having a session management function and a network element having a location management function, respectively. For ease of description, the session management function network element and the location management function network element are respectively referred to as an SMF and an LMF in subsequent descriptions of this application. It should be noted that, in future communication, the session management function network element and the location management function network element may still be referred to as an SMF and an LMF, or may have other names. This is not limited in this application.

**Table 1: Example of radio frequency channel mapping data**

| Configuration information of a measurement signal (Reference signal config) | Grid setting information (Grid config) | Location information (Localization grid) | Channel status prediction value (Channel Status) | Associated scatterer information or scatterer group information (Association scatter/ scatter group) | Associated sensing quality (Sensing quality) |
|---|---|---|---|---|---|
| | { Start location of a grid (start), a resolution of the grid (grid resolution) } | **(*xᵢ, y_{i,}zᵢ*)** /Grid number (Grid ID i) | ${R}_{i} = \left\{\begin{matrix}\left({Power}_{1}, {Delay}_{1}, {AOA}_{1}, {AOD}_{1}\right) , \\ \left({Power}_{2}, {Delay}_{2}, {AOA}_{2}, {AOD}_{2}\right) , \\ … , \\ \left({Power}_{k}, {Delay}_{k}, {AOA}_{k}, {AOD}_{k}\right)\end{matrix}\right\}$ | Identifier of Scatterer identifier (Scatter ID) $\left\{\begin{matrix}{P}_{1} , {P}_{2} , … , \\ {P}_{n}\end{matrix}\right\}$ | *Sᵢ* |

As shown in Table 1, the radio frequency channel mapping data may include one or more of the configuration information of the measurement signal, the grid setting information, the location information, the channel status prediction value, the associated scatterer or scatterer group, and the associated sensing quality. The following provides descriptions one by one.
1. The configuration information of the measurement signal may include one or more of a transmit/receive signal antenna port (port) number, precoding information, a subcarrier configuration, and the like.
   It may be understood that the configuration information of the measurement signal may be configuration information used by the sensing communication node to send an electromagnetic wave when a reconstructed map is obtained, for example, the transmit/receive antenna port number, the precoding information, the subcarrier configuration, and the like.
2. The location information indicates a geographical position. The location information may be indicated by using a relative position, for example, a distance or an angle relative to a base station, or may be indicated by using an absolute position, for example, longitude and latitude information. Alternatively, the location information may be indicated by using the grid number. In Table 1, the subscript i may be understood as the grid number.
3. The grid setting information indicates a start location of a grid and/or a resolution of the grid.
   The start location of the grid may indicate a start location for grid division, and may be indicated by using a relative position or an absolute position. The resolution of the grid may indicate a scale used for grid division. It may be understood that the resolution of the grid may alternatively not be indicated, and a default resolution is used.
4. The channel status prediction value may be indicated by using multipath information, for example, indicated by using a power-delay profile (power delay profile, PDP), a channel impulse response (channel impulse response, CIR), or the like. The channel status prediction value is calculated by the target sensing communication node by using the transmission path from the base station to the terminal at each location.
5. The associated scatterer information or scatterer group information is information about a scatterer or a scatterer group associated with a transmission path when a channel status prediction value of a grid is estimated. In a possible case, the scatterer information or scatterer group information may include one or more of an identifier of a scatterer and location information of the scatterer. The location information of the scatterer may be indicated by using coordinate information of a grid, or may be indicated by using an absolute position or a relative position. Optionally, the scatterer information or scatterer group information may further include obtaining-time information, for example, a timestamp, which represents that the sensing communication node in FIG. 4B senses a scatterer or a scatterer group at the timestamp.
6. The associated sensing quality is sensing quality corresponding to a grid, and is equivalent to service quality of sensing accuracy. Optionally, the sensing quality corresponding to the grid may have an initial value. The initial value may be set to a preset minimum value, or may be determined based on information about time of obtaining the scatterer information or scatterer group information. For example, a larger time difference between the time of obtaining the information and current time indicates a smaller initial value, and a smaller time difference between the obtaining-time information and the current time indicates a larger initial value. The associated sensing quality may be updated in a subsequent measurement process, which is described below.

In embodiments of this application, a first communication apparatus may obtain radio frequency channel mapping data, and receive a measurement signal from a second communication apparatus. The first communication apparatus may determine first sensing quality of a first location based on a measurement result of the measurement signal and a channel status prediction value that is included in the radio frequency channel mapping data and that is of the first location in which the first communication apparatus is located. In the method, the first communication apparatus may be a terminal or a base station. Similarly, the second communication apparatus may be a terminal or a base station. For example, when the first communication apparatus is a terminal, the second communication apparatus may be a base station. For another example, when the first communication apparatus is a base station, the second communication apparatus may be a terminal. For another example, when the first communication apparatus is a base station, the second communication apparatus may also be a base station. For another example, when the first communication apparatus is a terminal, the second communication apparatus may also be a terminal. The following provides descriptions with reference to the accompanying drawings.

The following provides detailed descriptions by using an example in which the first communication apparatus is a terminal and the second communication apparatus is a base station.

FIG. 5 is an example flowchart of a channel quality assessment method according to an embodiment of this application. The method may include the following steps.

S501: The terminal obtains radio frequency channel mapping data.

For example, the terminal may receive the radio frequency channel mapping data from the base station. It may be understood that the radio frequency channel mapping data may be sent by a network device, for example, the base station, to the terminal when channel quality assessment needs to be performed. Alternatively, the radio frequency channel mapping data may have been previously sent to the terminal and stored in the terminal.

In S501, the radio frequency channel mapping data may be stored in the base station or an LMF or an SMF in a core network device, and the base station may obtain the radio frequency channel mapping data and send the radio frequency channel mapping data to the terminal.

In a possible case, the base station may send all radio frequency channel mapping data to the terminal, and the radio frequency channel mapping data may be shown in Table 1. In another possible case, the base station may send a part of radio frequency channel mapping data to the terminal. For example, the base station may perform positioning on the terminal, or the terminal may send location information to the base station. In this way, the base station may send, to the terminal, related data of the first location in which the terminal is located. For example, the radio frequency channel mapping data sent by the base station to the terminal may include at least a channel status prediction value of the first location at which the terminal is located. Optionally, the radio frequency channel mapping data may further include reference sensing quality associated with the first location, for example, Sᵢ shown in Table 1. It may be understood that the reference sensing quality may be an initial value, or may be sensing quality that has been updated by using the embodiment shown in FIG. 5.

S502: The base station sends a measurement signal to the terminal.

Correspondingly, the terminal receives the measurement signal from the base station.

For example, the measurement signal may be a downlink signal such as channel state information (channel state information, CSI)-reference signal (reference signal, RS) or a positioning reference signal (positioning reference signal, PRS).

In a possible implementation, the terminal may obtain configuration information of the measurement signal. For example, the terminal may receive the configuration information of the measurement signal from the base station. For example, the base station may send a system message, and the terminal may receive the system message sent by the base station. The system message may include the configuration information of the measurement signal.

It should be noted that, when sending the measurement signal, the base station may send the measurement signal based on the configuration information of the measurement signal, for example, may send the measurement signal by using a transmit/receive antenna port number, precoding information, and a subcarrier configuration that are indicated in the configuration information of the measurement signal. Similarly, when receiving the measurement signal, the terminal may receive the measurement signal based on the configuration information of the measurement signal, for example, may receive the measurement signal by using the transmit/receive antenna port number, the precoding information, and the subcarrier configuration that are indicated in the configuration information of the measurement signal.

The terminal may measure the measurement signal to obtain a measurement result of the measurement signal. For example, the terminal may measure the measurement signal to obtain channel state information (channel state information, CSI), reference signal received power (reference signal received power, RSRP), reference signal received quality (reference signal received quality, RSRQ) or a signal to interference plus noise ratio (signal to interference plus noise ratio, SINR), an angle of arrival (angle of arrival, AOA), or the like of the measurement signal. This is not specifically limited in this application. The terminal may determine first sensing quality of the first location based on the measurement result and the channel status prediction value of the first location. For example, the terminal determines correlation between the measurement result and the channel status prediction value, to determine the first sensing quality. Details are described below.

For example, the channel status prediction value that is of the first location and that is included in the radio frequency channel mapping data includes Rᵢ elements, indicates a multipath component predicted by an environment at the first location (xᵢ, y_{i,}zᵢ), and is represented by using a formula (1): ${R}_{i} = \left\{\left({Power}_{1}{, Delay}_{1}{, AOX}_{1}\right),\left({Power}_{2}{, Delay}_{2}{, AOX}_{2}\right),…,\left({Power}_{k}{, Delay}_{k}{, AOX}_{k}\right)\right\}$

The terminal may measure the measurement signal, and may also determine the measurement result, which is represented by using a formula (2): ${R}_{ue} = \left\{\left({\hat{Power}}_{1}, {\hat{Delay}}_{1}, {\hat{AOX}}_{1}\right),\left({\hat{Power}}_{2}, {\hat{Delay}}_{2}, {\hat{AOX}}_{2}\right),…,\left({\hat{Power}}_{k}, {\hat{Delay}}_{k}, {\hat{AOX}}_{k}\right)\right\}$

The first location at which the terminal is located may be represented by **(*xᵤₑ, y_{ue,}zᵤₑ*).** Optionally, when a positioning capability or positioning accuracy of the terminal is good, for example, when positioning quality exceeds a preset threshold, it indicates that a global positioning system (global positioning system, GPS) or a line of sight (line of sight, LOS) condition is well assessed. Therefore, (xᵤₑ, y_{ue,}zᵤₑ) and corresponding Rᵤₑ may be placed in a record stack to represent true value information in reality.

It should be noted that the terminal may determine the correlation between Rᵢ and Rᵤₑ by using algorithms such as a Euclidean distance, a Manhattan distance, cosine similarity, Pearson correlation, and Jaccard (Jaccard) similarity. The Euclidean distance is used as an example for description.

The terminal may determine the correlation ***Sᵢ*** = ***f***(***Rᵢ**, **Rᵤₑ***) between ***Rᵢ*** and ***Rᵤₑ*** as the first sensing quality, and the correlation ***Sᵢ*** = ***f**(**Rᵢ**, **Rᵤₑ***) is represented by using a formula (3): ${S}_{i} = {\sum }_{k = 1}^{K} \left(\left|{\hat{Delay}}_{k}-{Delay}_{k}\right|+\left|{\hat{AOX}}_{k}-{AOX}_{k}\right|\right) \times {Power}_{i}$

Sᵢ may be used as updated first sensing quality.

Optionally, when Sᵢ is greater than (or greater than or equal to) a first threshold, it indicates that the channel status prediction value meets an expectation. In this case, the channel status prediction value of the first location and scatterer information or scatterer group information associated with the first location are available, and a protocol enables a part of sensing-assisted communication or positioning services related to data corresponding to the first location in the radio frequency channel mapping data. When Sᵢ is less than (or less than or equal to) a second threshold, it indicates that the channel status prediction value is lower than the expectation. In this case, the channel status prediction value of the first location and the scatterer information or the scatterer group information associated with the first location are unavailable, and the protocol disables a part of sensing-assisted communication or positioning services related to the data corresponding to the first location in the radio frequency channel mapping data, and the channel status prediction value of the first location and the scatterer information or the scatterer group information are only used to update subsequent sensing quality.

It may be understood that the first threshold and the second threshold may be the same or different. In a possible case, when the first threshold is different from the second threshold, and Sᵢ is less than (or less than or equal to) the first threshold and greater than (or greater than or equal to) the second threshold, the radio frequency channel mapping data of the first location and radio frequency channel mapping data of another location may be partially used for communication and/or positioning. For example, a large range including the first location or the another location may be obtained based on the radio frequency channel mapping data of the first location or the radio frequency channel mapping data of the another location, and sensing-assisted communication, positioning services, or the like are performed within the range.

S503: The terminal sends the first sensing quality to the base station.

Correspondingly, the base station receives the first sensing quality from the terminal.

Optionally, in S503, the terminal may further send, to the base station, one or more of location information of the first location and the associated scatterer information or scatterer group information. The location information may be indicated by using an absolute position, a relative position, or a number of a grid, and the associated scatterer information or scatterer group information may be determined based on the radio frequency channel mapping data in S501.

In a possible case, the terminal may update, to the first sensing quality, the reference sensing quality that is of the first location and that is in the obtained radio frequency channel mapping data. The terminal may send updated radio frequency channel mapping data to the base station.

Optionally, the embodiment shown in FIG. 5 may further include the following operations S504A and S505A or S504B and S505B.

S504A: The terminal updates, to the first sensing quality, reference sensing quality of another location associated with a scatterer indicated by the scatterer information associated with the first location.

For example, if the first sensing quality is greater than (or greater than or equal to) a threshold, it may be considered that the scatterer indicated by the scatterer information associated with the first location or a scatterer group indicated by the scatterer group information can well reflect a signal. Therefore, the terminal may update, to the first sensing quality, reference sensing quality of another location, other than the first location, associated with the scatterer information or the scatterer group information associated with the first location.

S505A: The terminal sends the updated radio frequency channel mapping data to the base station.

Correspondingly, the base station receives the updated radio frequency channel mapping data from the terminal.

For example, in S505A, the terminal may send location information of another location to the base station, where the location information may be indicated by using the absolute position, the relative position, or the number of the grid, and corresponding first sensing quality. For another example, the terminal may update reference sensing quality of the another location to the first sensing quality, and send updated radio frequency channel mapping data to the base station.

It may be understood that, in S504A and S505A, the terminal updates the reference sensing quality of the another location. If the terminal does not obtain related data of the another location other than the first location, the base station may update the reference sensing quality of the another location, as shown in S504B and S505B.

S504B: The base station updates, to the first sensing quality, reference sensing quality of another location associated with a scatterer indicated by the scatterer information associated with the first location.

Similarly, if the first sensing quality is less than or equal to a threshold, it may be considered that the scatterer indicated by the scatterer information associated with the first location or a scatterer group indicated by the scatterer group information can well reflect a signal. Therefore, after receiving the first sensing quality, the base station may update, to the first sensing quality, the reference sensing quality of the another location associated with the scatterer information or the scatterer group information associated with the first location.

S505B: The base station sends updated radio frequency channel mapping data to the terminal.

Correspondingly, the terminal receives the updated radio frequency channel mapping data from the base station.

For example, in S505B, the base station may send location information of the another location to the terminal, where the location information may be indicated by using the absolute position, the relative position, or the number of the grid, and corresponding first sensing quality. For another example, the base station may update the reference sensing quality of the another location to the first sensing quality, and send the updated radio frequency channel mapping data to the terminal.

It should be noted that whether related data corresponding to the another location can be used for sensing-assisted communication or positioning services may also be determined by comparing the first sensing quality with the first threshold and the second threshold.

In a possible scenario, a processing operation of the base station may be performed by a CU, and a transceiver operation of the base station may be performed by a DU or a RU. For example, the CU may update the radio frequency channel mapping data, and send the updated radio frequency channel mapping data to the DU. The DU may send the updated radio frequency channel mapping data to the terminal; or the DU may send the updated radio frequency channel mapping data to the RU, and the RU sends the updated radio frequency channel mapping data to the terminal. For another example, the DU may receive the first sensing quality, and send the first sensing quality to the CU, and the CU may update the radio frequency channel mapping data based on the first sensing quality. For another example, the RU may receive the first sensing quality, and send the first sensing quality to the DU, the DU may send the first sensing quality to the CU, and the CU may update the radio frequency channel mapping data based on the first sensing quality.

In another possible scenario, a processing operation of the base station may be performed by a CU-CP, and a transceiver operation of the base station may be performed by a DU or a RU. For example, the CU-CP may update the radio frequency channel mapping data, and send the updated radio frequency channel mapping data to the DU. The DU may send the updated radio frequency channel mapping data to the terminal; or the DU may send the updated radio frequency channel mapping data to the RU, and the RU sends the updated radio frequency channel mapping data to the terminal. For another example, the DU may receive the first sensing quality, and send the first sensing quality to the CU-CP, and the CU-CP may update the radio frequency channel mapping data based on the first sensing quality. For another example, the RU may receive the first sensing quality, and send the first sensing quality to the DU, the DU may send the first sensing quality to the CU-CP, and the CU-CP may update the radio frequency channel mapping data based on the first sensing quality.

In an O-RAN scenario, an operation performed by the CU may be performed by an O-CU, an operation performed by the DU may be performed by an O-DU, an operation performed by the RU may be performed by an O-RU, and an operation performed by the CU-CP may be performed by an O-CU-CP.

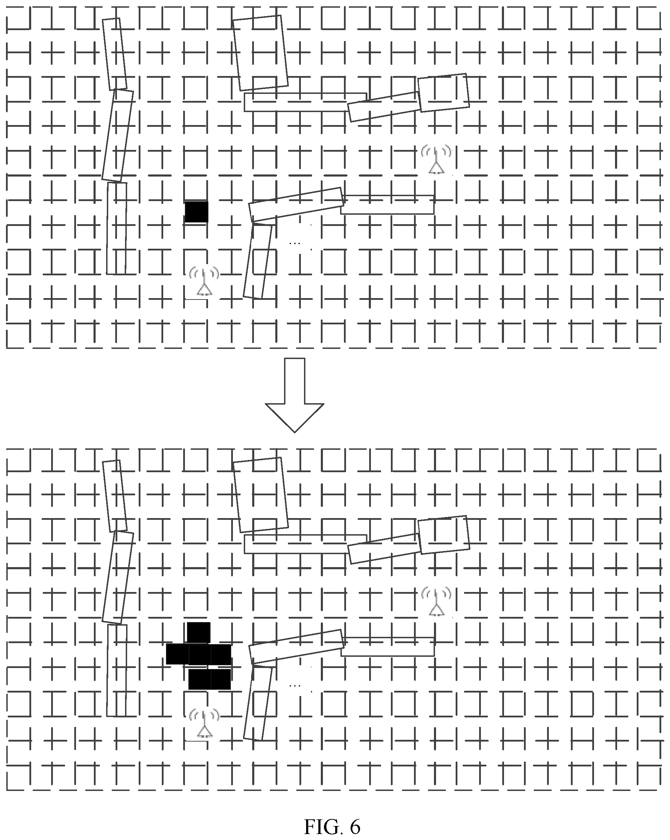

FIG. 6 is a diagram of updating sensing quality. As shown in FIG. 6, the terminal may be located at the first location, and the first sensing quality of the first location may be determined by using the embodiment shown in FIG. 5. The terminal or the base station may determine, based on the radio frequency channel mapping data, the another location associated with the scatterer information or the scatterer group information associated with the first location. In this case, the terminal or the base station may also update the reference sensing quality of the another location to the first sensing quality. In other words, the sensing quality of locations that share the scatterer information or the scatterer group information associated with the first location may be uniformly updated.

In a possible case, it is assumed that scatterers indicated by the scatterer information associated with the first location include a scatterer A and a scatterer B, and scatterers indicated by scatterer information associated with another location, for example, a second location, include the scatterer A, the scatterer B, and a scatterer C. In this case, the first communication apparatus and the second communication apparatus may determine a weight of each scatterer based on contributions of the scatterer A, the scatterer B, and the scatterer C to the predicted channel state value Rᵢ. In this case, sensing quality Sᵢ of the second location = quality of the scatterer A (the first sensing quality) * weight of the scatterer A + quality of the scatterer B (the first sensing quality) * weight of the scatterer B + weight of the scatterer C * quality of the scatterer C. The quality of the scatterer C may be shown in the embodiment shown in FIG. 5. A difference lies in that when the quality of the scatterer C is determined, a communication apparatus at a location associated with the scatterer C needs to perform the embodiment shown in FIG. 5.

Based on the foregoing solution, sensing quality of another grid associated with a scatterer or a scatterer group may be updated based on the first sensing quality, thereby improving reliability and services of the radio frequency channel mapping data.

The following provides descriptions by using an example in which the first communication apparatus is a base station and the second communication apparatus is a terminal.

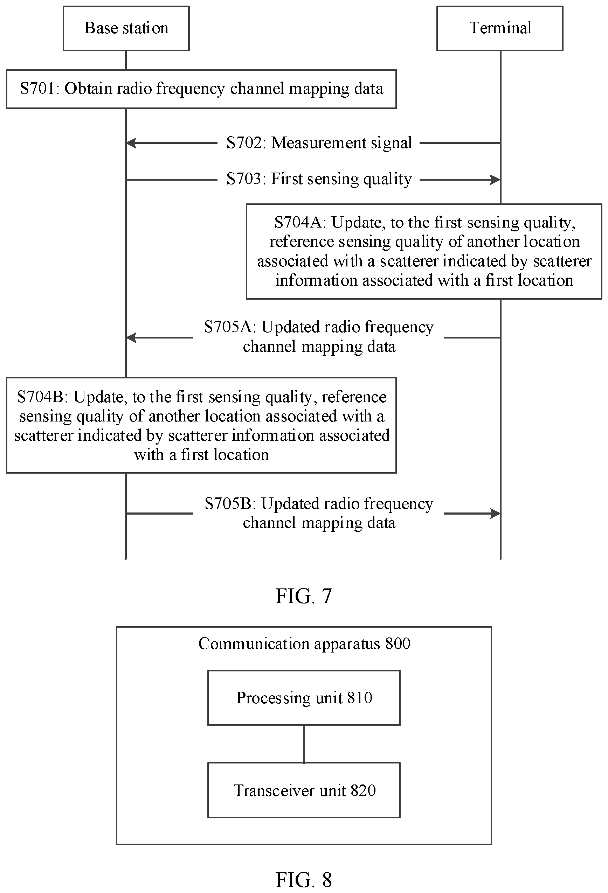

FIG. 7 is an example flowchart of a channel quality assessment method according to an embodiment of this application. The method may include the following steps. It may be understood that, in the embodiment shown in FIG. 5, the first communication apparatus is a terminal, the terminal may obtain the radio frequency channel mapping data from the base station, and the terminal updates the first sensing quality, so that privacy of the terminal can be improved.

S701: The base station obtains radio frequency channel mapping data.

For example, the base station may receive radio frequency channel mapping data from the terminal. It may be understood that the radio frequency channel mapping data may be sent by the terminal to the base station when channel quality assessment needs to be performed. Alternatively, the radio frequency channel mapping data may have been previously sent to the base station and stored in the base station. For another example, the base station may obtain the radio frequency channel mapping data from an LMF or an SMF in a core network device.

In a possible case, the base station may obtain all radio frequency channel mapping data. In another possible case, the base station may obtain a part of radio frequency channel mapping data. For example, the radio frequency channel mapping data obtained by the base station may include at least a channel status prediction value of a first location at which the terminal is located. Optionally, the radio frequency channel mapping data obtained by the base station may further include reference sensing quality associated with the first location, for example, Sᵢ shown in Table 1. It may be understood that the reference sensing quality may be an initial value, or may be sensing quality that has been updated by using the embodiment shown in FIG. 6.

S702: The terminal sends a measurement signal to the base station.

Correspondingly, the base station receives the measurement signal from the terminal.

For example, the measurement signal is an uplink signal such as an uplink reference signal (sounding reference signal, SRS).

In a possible implementation, the base station may obtain configuration information of the measurement signal. For example, the base station may obtain the configuration information used to determine the radio frequency channel mapping data. Optionally, the base station may send the configuration information of the measurement signal to the terminal. For example, the base station may send a system message, and the terminal may receive the system message sent by the base station.

It should be noted that, when sending the measurement signal, the terminal may send the measurement signal based on the configuration information of the measurement signal, for example, may send the measurement signal by using a transmit/receive antenna port number, precoding information, and a subcarrier configuration that are indicated in the configuration information of the measurement signal. Similarly, when receiving the measurement signal, the base station may receive the measurement signal based on the configuration information of the measurement signal, for example, may receive the measurement signal by using the transmit/receive antenna port number, the precoding information, and the subcarrier configuration that are indicated in the configuration information of the measurement signal.

The base station may measure the measurement signal to obtain a measurement result of the measurement signal. For example, the base station may measure the measurement signal to obtain RSRP, RSRQ or an SINR, an AOA, or the like of the measurement signal. This is not specifically limited in this application. The base station may determine first sensing quality of the first location based on the measurement result and the channel status prediction value of the first location. For example, the base station may determine the first sensing quality by determining correlation between the measurement result and the channel status prediction value. For details, refer to the embodiment shown in FIG. 5. Details are not described herein again.

S703: The base station sends the first sensing quality to the terminal.

Correspondingly, the terminal receives the first sensing quality from the base station.

Optionally, in S703, the base station may further send, to the terminal, one or more of location information of the first location and associated scatterer information or scatterer group information.

In a possible case, the base station may update, to the first sensing quality, the reference sensing quality that is of the first location and that is in the obtained radio frequency channel mapping data. The base station may send updated radio frequency channel mapping data to the terminal.

For S704A and S705A or S704B and S705B, refer to S504A and S505A or S504B and S505B for implementation.

In embodiments of this application, an operation of updating the reference sensing quality may be periodic or triggered based on a condition. For example, the first communication apparatus and the second communication apparatus may update the reference sensing quality by sending and receiving a measurement signal every fixed period. For another example, when beam control needs to be performed, the first communication apparatus and the second communication apparatus may update the reference sensing quality by sending and receiving a measurement signal. This is not specifically limited in this application.

In a possible scenario, a processing operation of the base station may be performed by a CU, and a transceiver operation of the base station may be performed by a DU or a RU. For example, the CU may determine the first sensing quality, and send the first sensing quality to the DU. The DU may send the first sensing quality to the terminal; or the DU may send the first sensing quality to the RU, and the RU sends the first sensing quality to the terminal. For another example, the DU may receive the measurement signal, and send the measurement signal to the CU, and the CU may measure the measurement signal to obtain the measurement result. For another example, the RU may receive the measurement signal, and send the measurement signal to the DU, the DU may send the measurement signal to the CU, and the CU may measure the measurement signal to obtain the measurement result.

In another possible scenario, a processing operation of the base station may be performed by a CU-CP, and a transceiver operation of the base station may be performed by a DU or a RU. For example, the CU-CP may determine the first sensing quality, and send the first sensing quality to the DU. The DU may send the first sensing quality to the terminal; or the DU may send the first sensing quality to the RU, and the RU sends the first sensing quality to the terminal. For another example, the DU may receive the measurement signal, and send the measurement signal to the CU-CP, and the CU-CP may measure the measurement signal to obtain the measurement result. For another example, the RU may receive the measurement signal, and send the measurement signal to the DU, the DU may send the measurement signal to the CU-CP, and the CU-CP may measure the measurement signal to obtain the measurement result.

In an O-RAN scenario, an operation performed by the CU may be performed by an O-CU, an operation performed by the DU may be performed by an O-DU, an operation performed by the RU may be performed by an O-RU, and an operation performed by the CU-CP may be performed by an O-CU-CP.

Communication apparatuses provided in embodiments of this application are described based on the following embodiments. FIG. 8 is a block diagram of a communication apparatus 800 according to an embodiment of this application. The communication apparatus 800 may correspondingly implement functions or steps implemented by the first communication apparatus or the second communication apparatus in the foregoing method embodiments. The communication apparatus may include a processing unit 810 and a transceiver unit 820. Optionally, the communication apparatus may further include a storage unit. The storage unit may be configured to store instructions (code or a program) and/or data. The processing unit 810 and the transceiver unit 820 may be coupled to the storage unit. For example, the processing unit 810 may read the instructions (the code or the program) and/or the data in the storage unit, to implement a corresponding method. The foregoing units may be independently disposed, or may be partially or completely integrated.

Optionally, the transceiver unit 820 may include a sending unit and a receiving unit. The sending unit may be configured to perform all sending operations performed by the communication apparatus 800, and the receiving unit may be configured to perform all receiving operations performed by the communication apparatus 800.

In some possible implementations, the communication apparatus 800 can correspondingly implement behavior and functions of the first communication apparatus in the foregoing method embodiments. For example, the communication apparatus 800 may be the first communication apparatus, or may be a component (for example, a chip or a circuit) used in the first communication apparatus. The transceiver unit 820 may be configured to perform all receiving or sending operations performed by the first communication apparatus in the embodiment shown in FIG. 5, for example, S502 in the embodiment shown in FIG. 5, and/or configured to support another process in the technology described in this specification. The processing unit 810 is configured to perform all operations performed by the first communication apparatus in the embodiment shown in FIG. 5 except receiving and sending operations, for example, S501 in the embodiment shown in FIG. 5, and/or configured to support another process in the technology described in this specification.

For example, the processing unit 810 is configured to obtain at least one piece of radio frequency channel mapping data, where the radio frequency channel mapping data includes at least a channel status prediction value of a first location, and a first communication apparatus is located at the first location. The transceiver unit 820 is configured to receive a measurement signal. The transceiver unit 820 is further configured to send first sensing quality, where the first sensing quality is determined based on a measurement result of the measurement signal and the channel status prediction value of the first location.

In some possible implementations, the communication apparatus 800 can correspondingly implement behavior and functions of the second communication apparatus in the foregoing method embodiments. For example, the communication apparatus 800 may be the second communication apparatus, or may be a component (for example, a chip or a circuit) used in the second communication apparatus. The transceiver unit 820 may be configured to perform all receiving or sending operations performed by the second communication apparatus in the embodiment shown in FIG. 5, for example, S502 in the embodiment shown in FIG. 5, and/or configured to support another process in the technology described in this specification. The processing unit 810 is configured to perform all operations performed by the second communication apparatus in the embodiment shown in FIG. 5 except receiving and sending operations, for example, S504B in the embodiment shown in FIG. 5, and/or configured to support another process in the technology described in this specification.

For example, the processing unit 810 is configured to determine at least one piece of radio frequency channel mapping data, where the radio frequency channel mapping data includes at least a channel status prediction value of a first location, and a first communication apparatus is located at the first location. The transceiver unit 820 is configured to send the radio frequency channel mapping data. The transceiver unit 820 is further configured to send a measurement signal. The transceiver unit 820 is further configured to receive first sensing quality, where the first sensing quality is determined based on a measurement result of the measurement signal and the channel status prediction value of the first location.

For operations performed by the processing unit 810 and the transceiver unit 820, refer to the related descriptions in the foregoing method embodiments.

It should be understood that the processing unit 810 in this embodiment of this application may be implemented by a processor or a processor-related circuit component, and the transceiver unit 820 may be implemented by a transceiver, a transceiver-related circuit component, or a communication interface.

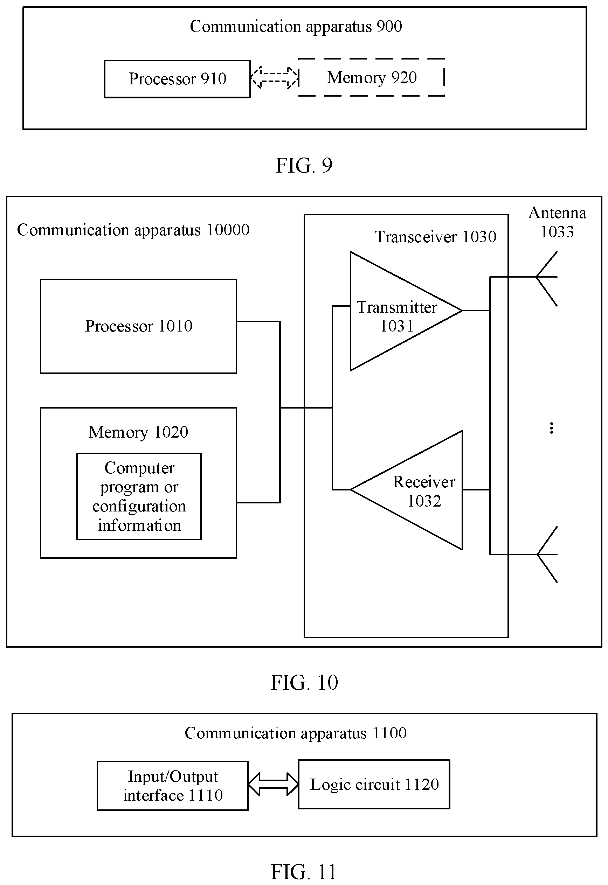

Based on a same idea, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, store input data required by the processor 910 to run the instructions, or store data generated after the processor 910 runs the instructions. The processor 910 may implement, by using the instructions stored in the memory 920, the methods shown in the foregoing method embodiments.

Based on a same idea, as shown in FIG. 10, an embodiment of this application provides a communication apparatus 10000. The communication apparatus 10000 may be a chip or a chip system. Optionally, in this embodiment of this application, the chip system may include a chip, or may include a chip and another discrete component.

The communication apparatus 10000 may include at least one processor 1010. The processor 1010 is coupled to a memory. Optionally, the memory may be located inside the apparatus, or may be located outside the apparatus. For example, the communication apparatus 10000 may further include at least one memory 1020. The memory 1020 stores a computer program, configuration information, a computer program or instructions and/or data necessary for implementing any one of the foregoing embodiments. The processor 1010 may execute the computer program stored in the memory 1020, to complete the method in any one of the foregoing embodiments.

Coupling in this embodiment of this application may be indirect coupling or a communication connection between apparatuses, units, or modules, may be in an electrical form, a mechanical form, or another form, and is used for information exchange between the apparatuses, the units, or the modules. The processor 1010 may cooperate with the memory 1020. In this embodiment of this application, a specific connection medium between a transceiver 1030, the processor 1010, and the memory 1020 is not limited.

The communication apparatus 10000 may further include the transceiver 1030, and the communication apparatus 10000 may exchange information with another device via the transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when the communication apparatus 10000 is a chip-type apparatus or a circuit, the transceiver in the communication apparatus 10000 may alternatively be an input/output circuit and/or a communication interface, and may input data (or referred to as "receive data") and output data (or referred to as "send data"); and the processor is an integrated processor, a microprocessor, or an integrated circuit, and the processor may determine output data based on input data.

In a possible implementation, the communication apparatus 10000 may be used in a first communication apparatus. Specifically, the communication apparatus 10000 may be the first communication apparatus, or may be an apparatus that can support the first communication apparatus in implementing the functions of the first communication apparatus in any one of the foregoing embodiments. The memory 1020 stores a necessary computer program, a computer program or instructions, and/or data for implementing the functions of the communication apparatus in any one of the foregoing embodiments. The processor 1010 may execute the computer program stored in the memory 1020, to complete the method performed by the first communication apparatus in any one of the foregoing examples.

In a possible implementation, the communication apparatus 10000 may be used in a second communication apparatus. Specifically, the communication apparatus 10000 may be the second communication apparatus, or may be an apparatus that can support the second communication apparatus in implementing functions of the second communication apparatus in any one of the foregoing embodiments. The memory 1020 stores a necessary computer program, a computer program or instructions, and/or data for implementing the functions of the second communication apparatus in any one of the foregoing embodiments. The processor 1010 may execute the computer program stored in the memory 1020, to complete the method performed by the second communication apparatus in any one of the foregoing examples.

The communication apparatus 10000 provided in this embodiment may be used in the first communication apparatus to complete the method performed by the first communication apparatus, or may be used in the second communication apparatus to complete the method performed by the second communication apparatus. Therefore, for technical effect that can be achieved by the communication apparatus 10000, refer to the foregoing method embodiments. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware and a software module in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 11. Based on the foregoing embodiments, embodiments of this application further provide another communication apparatus 1100, including an input/output interface 1110 and a logic circuit 1120. The input/output interface 1110 is configured to receive code instructions and transmit the code instructions to the logic circuit 1120. The logic circuit 1120 is configured to run the code instructions to perform the method performed by the first communication apparatus or the second communication apparatus in any one of the foregoing embodiments.

Optionally, the input/output interface 1110 may be an interface on a chip, and the logic circuit 1120 may be one or more processors. Optionally, the one or more processors may be located in the apparatus, or may be located outside the apparatus.

The following describes in detail operations performed by the communication apparatus when the communication apparatus is used in a first communication apparatus or a second communication apparatus.

In an optional implementation, the communication apparatus 1100 may be used in the first communication apparatus to perform the method performed by the first communication apparatus, specifically, for example, the method performed by the first communication apparatus in the embodiment shown in FIG. 5.

For example, the logic circuit 1120 is configured to obtain at least one piece of radio frequency channel mapping data, where the radio frequency channel mapping data includes at least a channel status prediction value of a first location, and the first communication apparatus is located at the first location. The input/output interface 1110 is configured to receive a measurement signal. The input/output interface 1110 is further configured to send first sensing quality, where the first sensing quality is determined based on a measurement result of the measurement signal and the channel status prediction value of the first location.

The communication apparatus 1100 provided in this embodiment may be used in the first communication apparatus to implement the method performed by the first communication apparatus. Therefore, for technical effect that can be achieved by the communication apparatus 1100, refer to the foregoing method embodiments. Details are not described herein again.

In an optional implementation, the communication apparatus 1100 may be used in the second communication apparatus to perform the method performed by the second communication apparatus, specifically, for example, the method performed by the second communication apparatus in the embodiment shown in FIG. 5.

For example, the logic circuit 1120 is configured to determine at least one piece of radio frequency channel mapping data, where the radio frequency channel mapping data includes at least a channel status prediction value of a first location, and a first communication apparatus is located at the first location. The input/output interface 1110 is configured to send the radio frequency channel mapping data. The input/output interface 1110 is further configured to measure a signal. The input/output interface 1110 is further configured to receive first sensing quality, where the first sensing quality is determined based on a measurement result of the measurement signal and the channel status prediction value of the first location.

The communication apparatus 1100 provided in this embodiment may be used in the second communication apparatus to implement the method performed by the second communication apparatus. Therefore, for technical effect that can be achieved by the communication apparatus 1100, refer to the foregoing method embodiments. Details are not described herein again.

Based on the foregoing embodiments, embodiments of this application further provide a communication system. The communication system includes at least one communication apparatus used in a first communication apparatus and at least one communication apparatus used in a second communication apparatus. For technical effect that can be achieved, refer to the foregoing method embodiments. Details are not described herein again.

Based on the foregoing embodiments, embodiments of this application further provide a system. The communication system includes at least one second communication apparatus and a first communication apparatus.

Based on the foregoing embodiments, embodiments of this application further provide a computer-readable storage medium. The computer-readable storage medium stores a computer program or instructions. When the instructions are executed, the method performed by the first communication apparatus or the method performed by the second communication apparatus in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement functions of the communication apparatuses in FIG. 8 to FIG. 11, embodiments of this application further provide a chip, including a processor, configured to support the communication apparatuses in implementing functions of the first communication apparatus or the second communication apparatus in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A channel quality assessment method, applied to a first communication apparatus and comprising:
obtaining at least one piece of radio frequency channel mapping data, wherein the radio frequency channel mapping data comprises at least a channel status prediction value of a first location, and the first communication apparatus is located at the first location;
receiving a measurement signal from the second communication apparatus; and
sending first sensing quality to the second communication apparatus, wherein the first sensing quality is determined based on a measurement result of the measurement signal and the channel status prediction value of the first location.

2. The method according to claim 1, further comprising:
the radio frequency channel mapping data further comprises reference sensing quality of the first location, and the reference sensing quality of the first location is updated to the first sensing quality.

3. The method according to claim 1 or 2, wherein the radio frequency channel mapping data further comprises scatterer information of the first location, and the scatterer information indicates a scatterer associated with at least one communication path between the first communication apparatus at the first location and a network device; and
reference sensing quality of another location associated with the scatterer other than the first location is updated to the first sensing quality.

4. The method according to any one of claims 1 to 3, wherein the radio frequency channel mapping data further comprises one or more of the following:
configuration information of the measurement signal, wherein the configuration information comprises one or more of information about a transmit/receive antenna port number, precoding information, and subcarrier information of the measurement signal;
location information, wherein the location information indicates a geographical position of the first location; and
grid setting information, wherein the first location is indicated by using a number of a grid, and the grid setting information indicates a start location of the grid and/or a resolution of the grid.

5. The method according to claim 3, wherein when the first sensing quality is greater than a threshold, the radio frequency channel mapping data of the first location and radio frequency channel mapping data of the another location are used for communication and/or positioning; or
when the first sensing quality is less than the threshold, the radio frequency channel mapping data of the first location and the radio frequency channel mapping data of the another location are not used for communication and/or positioning.

6. The method according to any one of claims 1 to 5, wherein obtaining the radio frequency channel mapping data comprises:
receiving the radio frequency channel mapping data from the second communication apparatus.

7. A channel quality assessment method, applied to a second communication apparatus and comprising:
sending at least one piece of radio frequency channel mapping data to a first communication apparatus, wherein the radio frequency channel mapping data comprises at least a channel status prediction value of a first location, and the first communication apparatus is located at the first location;
sending a measurement signal to the first communication apparatus; and
receiving first sensing quality from the first communication apparatus, wherein the first sensing quality is determined based on a measurement result of the measurement signal and the channel status prediction value of the first location.

8. The method according to claim 7, wherein the radio frequency channel mapping data further comprises reference sensing quality of the first location, and the reference sensing quality of the first location is updated to the first sensing quality.

9. The method according to claim 7 or 8, wherein the radio frequency channel mapping data further comprises scatterer information of the first location, and the scatterer information indicates a scatterer associated with at least one communication path between the first communication apparatus at the first location and a network device; and
reference sensing quality of another location associated with the scatterer other than the first location is updated to the first sensing quality.

10. The method according to any one of claims 7 to 9, wherein the radio frequency channel mapping data further comprises one or more of the following:
configuration information of the measurement signal, wherein the configuration information comprises one or more of information about a transmit/receive antenna port number, precoding information, and subcarrier information of the measurement signal;
location information, wherein the location information indicates a geographical position of the first location; and
grid setting information, wherein the first location is indicated by using a number of a grid, and the grid setting information indicates a start location of the grid and/or a resolution of the grid.

11. The method according to claim 9, wherein when the first sensing quality is greater than a threshold, the radio frequency channel mapping data of the first location and radio frequency channel mapping data of the another location are used for communication and/or positioning; or
when the first sensing quality is less than the threshold, the radio frequency channel mapping data of the first location and the radio frequency channel mapping data of the another location are not used for communication and/or positioning.

12. A communication apparatus, comprising:
a processing unit, configured to obtain at least one piece of radio frequency channel mapping data, wherein the radio frequency channel mapping data comprises at least a channel status prediction value of a first location, and the communication apparatus is located at the first location; and
a transceiver unit, configured to receive a measurement signal from the second communication apparatus, wherein
the transceiver unit is further configured to send first sensing quality to the second communication apparatus, wherein the first sensing quality is determined based on a measurement result of the measurement signal and the channel status prediction value of the first location.

13. The apparatus according to claim 12, further comprising:
the radio frequency channel mapping data further comprises reference sensing quality of the first location, and the processing unit is further configured to update the reference sensing quality of the first location to the first sensing quality.

14. The apparatus according to claim 12 or 13, wherein the radio frequency channel mapping data further comprises scatterer information of the first location, and the scatterer information indicates a scatterer associated with at least one communication path between the communication apparatus at the first location and a network device; and
the processing unit is further configured to update, to the first sensing quality, reference sensing quality of another location associated with the scatterer other than the first location.

15. The apparatus according to any one of claims 12 to 14, wherein the radio frequency channel mapping data further comprises one or more of the following:
configuration information of the measurement signal, wherein the configuration information comprises one or more of information about a transmit/receive antenna port number, precoding information, and subcarrier information of the measurement signal;
location information, wherein the location information indicates a geographical position of the first location; and
grid setting information, wherein the first location is indicated by using a number of a grid, and the grid setting information indicates a start location of the grid and/or a resolution of the grid.

16. The apparatus according to claim 14, wherein when the first sensing quality is greater than a threshold, the radio frequency channel mapping data of the first location and radio frequency channel mapping data of the another location are used for communication and/or positioning; or
when the first sensing quality is less than the threshold, the radio frequency channel mapping data of the first location and the radio frequency channel mapping data of the another location are not used for communication and/or positioning.

17. The apparatus according to any one of claims 12 to 16, wherein the transceiver unit is further configured to:
receive the radio frequency channel mapping data from the second communication apparatus.

18. A communication apparatus, comprising:
a processing unit, configured to determine at least one piece of radio frequency channel mapping data, wherein the radio frequency channel mapping data comprises at least a channel status prediction value of a first location, and a first communication apparatus is located at the first location; and
the transceiver unit, further configured to send the at least one piece of radio frequency channel mapping data to the first communication apparatus, wherein
the transceiver unit is configured to send a measurement signal to the first communication apparatus; and
the transceiver unit is further configured to receive first sensing quality from the first communication apparatus, wherein the first sensing quality is determined based on a measurement result of the measurement signal and the channel status prediction value of the first location.

19. The apparatus according to claim 18, wherein the radio frequency channel mapping data further comprises reference sensing quality of the first location, and the reference sensing quality of the first location is updated to the first sensing quality.

20. The apparatus according to claim 18 or 19, wherein the radio frequency channel mapping data further comprises scatterer information of the first location, and the scatterer information indicates a scatterer associated with at least one communication path between the first communication apparatus at the first location and a network device; and
the processing unit is further configured to update, to the first sensing quality, reference sensing quality of another location associated with the scatterer other than the first location.

21. The apparatus according to any one of claims 18 to 20, wherein the radio frequency channel mapping data further comprises one or more of the following:
configuration information of the measurement signal, wherein the configuration information comprises one or more of information about a transmit/receive antenna port number, precoding information, and subcarrier information of the measurement signal;
location information, wherein the location information indicates a geographical position of the first location; and
grid setting information, wherein the first location is indicated by using a number of a grid, and the grid setting information indicates a start location of the grid and/or a resolution of the grid.

22. The apparatus according to claim 20, wherein when the first sensing quality is greater than a threshold, the radio frequency channel mapping data of the first location and radio frequency channel mapping data of the another location are used for communication and/or positioning; or
when the first sensing quality is less than the threshold, the radio frequency channel mapping data of the first location and the radio frequency channel mapping data of the another location are not used for communication and/or positioning.

23. A communication apparatus, comprising a unit configured to perform the method according to any one of claims 1 to 6, or comprising a unit configured to perform the method according to any one of claims 7 to 11.

24. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 6, or the electronic apparatus is enabled to perform the method according to any one of claims 7 to 11.

25. A communication system, comprising an apparatus configured to perform the method according to any one of claims 1 to 6 and an apparatus configured to perform the method according to any one of claims 7 to 11.

26. A chip system, wherein the chip system comprises:
a communication interface; and
a processor, configured to: invoke and run instructions through the communication interface, to enable a device installed with the chip system to perform the method according to any one of claims 1 to 6, or enable the device installed with the chip system to perform the method according to any one of claims 7 to 11.
